# EUROPEAN PATENT APPLICATION

(11) **EP 4 641 909 A1**
(43) Date of publication of application: **29.10.2025**
(21) Application number: 22969242.1
(22) Date of filing: 23.12.2022
(51) Int. Cl.: H02M 7/49

(54) **POWER CONVERSION DEVICE**

(71) Applicant: MITSUBISHI ELECTRIC CORPORATION, Chiyoda-ku Tokyo 100-8310 (JP)
(72) Inventor: NAKAYAMA Akito, Tokyo 100-8310 (JP)
(74) Representative: Hoffmann Eitle
(86) International application number: PCT/JP2022/047521
(87) International publication number: WO 2024/134858

(57) **Abstract**

A power conversion device (1) includes: a power converter (10) in which a plurality of leg circuits (100u, 100v, 100w) each having positive and negative arms (110) connected in series are connected in parallel; and a control device (20) which controls the power converter (10). The control device (20) generates arm output voltage command values (Varm) which are command values for voltages to be outputted by a plurality of the arms (100). Circulation current control is performed for each of the leg circuits (100u, 100v, 100w). When a voltage total value (Vcu, Vcv, Vcw) of DC capacitors (111C) included in at least one leg circuit (100u, 100v, 100w) is equal to or greater than a first threshold (δ1), correction is performed by a voltage command correction value (ΔVarm) so that, if the arm output voltage command value (Varm) for one arm in the leg circuit (100u, 100v, 100w) is greater than an upper threshold (Vcp, Vcn), the arm output voltage command value (Varm) becomes equal to or smaller than the upper threshold, and if the arm output voltage command value (Varm) is smaller than a lower threshold (0 V), the arm output voltage command value (Varm) becomes equal to or greater than the lower threshold. Also, the arm output voltage command value (Varm) for the other arm is corrected on the basis of the correction voltage (ΔVarm).

## Description

### TECHNICAL FIELD

The present disclosure relates to a power conversion device.

### BACKGROUND ART

In recent years, in a power conversion device used for a high-voltage purpose such as a power grid, a multilevel converter in which a plurality of converter cells each including an energy storage element are connected in series in a multiplexed manner has been put to practical use. Such a converter is called a modular multilevel converter (MMC) or a cascade multilevel converter (CMC), and is used for conversion from three-phase AC to DC or conversion opposite thereto.

In a power conversion device having a capacitor as an energy storage element, voltage variation can be suppressed. However, if the capacitance of the capacitor is small, voltages applied to switching elements composing the converter cell might exceed the withstand voltage of the switching elements. Therefore, the capacitance of the capacitor is increased or the withstand voltage of the switching elements is increased, but in this case, the cost or the size of the power conversion device increases.

Regarding this problem, Patent Document 1 discloses that circulation current flowing through arm units composing a power conversion device is adjusted so that the average value of capacitor voltages in each arm unit becomes constant and the variation width thereof is reduced.

The applicant of the present disclosure discloses, in Patent Document 2, that an arm voltage command value is corrected using a zero-phase-sequence voltage command value so as not to exceed an arm output voltage range.

### CITATION LIST

### PATENT DOCUMENT

Patent Document 1: Japanese Laid-Open Patent Publication No. 2018-196237
Patent Document 2: WO2021/199150

### SUMMARY OF THE INVENTION

### PROBLEM TO BE SOLVED BY THE INVENTION

In a case where great overmodulation occurs during a fault or immediately after recovery from a fault, each arm cannot output voltage that should be originally outputted, due to imbalance of capacitor voltages or variation in grid voltage connected to a power conversion device, and thus current that is not assumed might flow. In this case, imbalance of the capacitor voltages cannot be eliminated, so that the power conversion device might not be able to continue operation.

The present disclosure has been made to solve the above problem, and an object of the present disclosure is to provide a power conversion device that can swiftly balance unbalanced capacitor voltages among arms.

### MEANS TO SOLVE THE PROBLEM

A power conversion device according to the present disclosure includes: a power converter which performs power conversion between multiphase AC and DC and in which a plurality of leg circuits each having a positive arm and a negative arm connected in series are connected in parallel and connection points between the positive arms and the negative arms of the plurality of leg circuits are connected to AC lines for respective phases; and a control device which controls the power converter. The positive arms and the negative arms each include one or a plurality of converter cells connected in series, the one or each converter cell having a series unit in which a plurality of semiconductor switching elements are connected in series and a DC capacitor connected in parallel to the series unit. The control device includes an arm output voltage command value generation unit which generates arm output voltage command values which are command values for voltages to be outputted by a plurality of the arms. Circulation current control is performed for each of the leg circuits. When a total value of voltages of all the DC capacitors included in at least one of the leg circuits is equal to or greater than a predetermined first threshold, a voltage command correction value for correcting the arm output voltage command values is generated to perform correction so that, if the arm output voltage command value for one of the positive arm and the negative arm in the leg circuit is greater than a predetermined upper threshold, the arm output voltage command value becomes equal to or smaller than the upper threshold, and if the arm output voltage command value is smaller than a predetermined lower threshold, the arm output voltage command value becomes equal to or greater than the lower threshold. The arm output voltage command value for another arm of the leg circuit for which circulation current control is being performed is corrected on the basis of the voltage command correction value.

### EFFECT OF THE INVENTION

With the power conversion device according to the present disclosure, it becomes possible to swiftly balance unbalanced capacitor voltages among arms.

### BRIEF DESCRIPTION OF THE DRAWINGS

[FIG. 1] FIG. 1 is a schematic diagram showing a configuration of a power conversion device according to embodiment 1.
[FIG. 2A] FIG. 2A is a configuration diagram showing an example of a converter cell composing the power conversion device according to embodiment 1.
[FIG. 2B] FIG. 2B is a configuration diagram showing another example of a converter cell composing the power conversion device according to embodiment 1.
[FIG. 2C] FIG. 2C is a configuration diagram showing another example of a converter cell composing the power conversion device according to embodiment 1.
[FIG. 3] FIG. 3 is a function block diagram showing the configuration of a control device according to embodiment 1.
[FIG. 4] FIG. 4 shows a state in which generated modulation signals are inputted to gate signal generation units.
[FIG. 5] FIG. 5 is a function block diagram showing a configuration of a command generation unit of a control device according to embodiment 1.
[FIG. 6] FIG. 6 shows a configuration of a voltage command value correction unit according to embodiment 1.
[FIG. 7] FIG. 7 shows a configuration of a correction voltage calculation unit according to embodiment 1.
[FIG. 8A] FIG. 8A illustrates effects of the power conversion device according to embodiment 1.
[FIG. 8B] FIG. 8B is an enlarged diagram showing regions indicated by broken lines A and B in FIG. 8A.
[FIG. 9] FIG. 9 is a function block diagram showing a configuration of a command generation unit of a control device according to embodiment 2.
[FIG. 10] FIG. 10 shows a configuration of a voltage command value correction unit according to embodiment 2.
[FIG. 11] FIG. 11 shows a configuration of a correction voltage calculation unit according to embodiment 2.
[FIG. 12] FIG. 12 illustrates a correction tolerance for voltage within which correction is possible, calculated by the correction voltage calculation unit.
[FIG. 13] FIG. 13 shows a configuration of a correction zero-phase-sequence voltage calculation unit according to embodiment 2.
[FIG. 14] FIG. 14 is a hardware configuration diagram showing an example of the control device according to embodiment 1 or 2.

### DESCRIPTION OF EMBODIMENTS

Hereinafter, the present embodiment will be described with reference to the drawings. In the drawings, the same reference characters denote the same or corresponding parts.

### Embodiment 1

Hereinafter, a power conversion device according to embodiment 1 will be described with reference to the drawings.

### <Configuration of power conversion device>

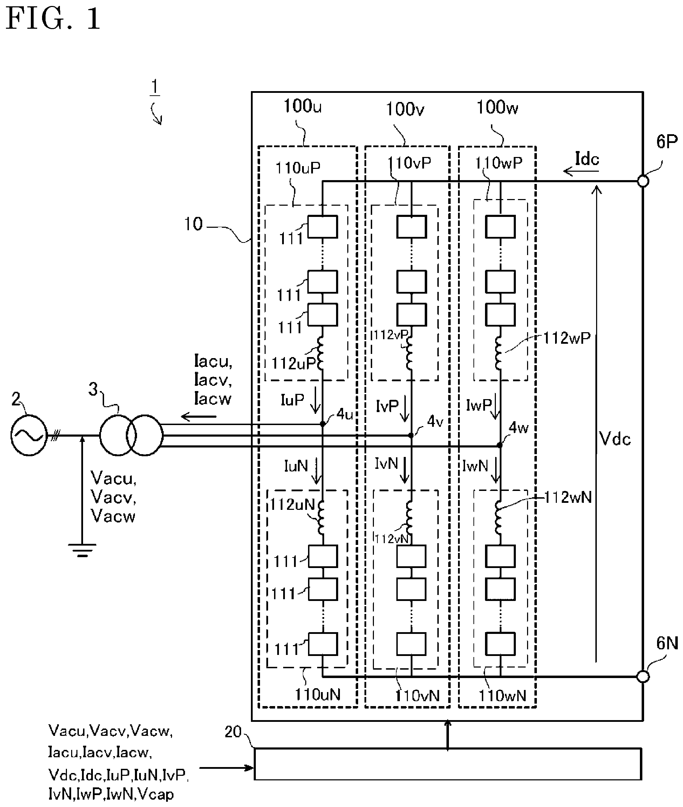

FIG. 1 shows a schematic configuration of an example of a power grid to which the power conversion device 1 according to embodiment 1 is applied. As shown in FIG. 1, the power conversion device 1 includes a power converter 10 as a main circuit, and a control device 20 as a control unit which controls the power converter 10. The power converter 10 performs power conversion between AC and DC. The AC side of the power converter 10 is connected to an AC power supply 2 which is a three-phase AC grid as multiphase AC via a transformer 3, and the DC side of the power converter 10 is connected to a DC grid (not shown) via a positive DC terminal 6P and a negative DC terminal 6N. The DC grid is a DC power supply such as a large-scale photovoltaic generation system or an industrial uninterruptible power supply (UPS), or another power converter, for example.

The power converter 10 includes three leg circuits 100u, 100v, 100w respectively provided for U phase, V phase, and W phase of three-phase AC and connected in parallel between the positive DC terminal 6P and the negative DC terminal 6N. The leg circuit 100u has a positive arm 100uP and a negative arm 100uN as a pair of arms, and the positive arm 100uP and the negative arm 100uN are connected in series to each other. One end of the positive arm 100uP is connected to the positive DC terminal 6P, and one end of the negative arm 100uN is connected to the negative DC terminal 6N. A connection point 4u between the positive arm 100uP and the negative arm 100uN is connected to a U-phase terminal of the transformer 3.

The leg circuit 100v has a positive arm 100vP and a negative arm 100vN as a pair of arms, and the positive arm 100vP and the negative arm 100vN are connected in series to each other. One end of the positive arm 100vP is connected to the positive DC terminal 6P, and one end of the negative arm 100vN is connected to the negative DC terminal 6N. A connection point 4v between the positive arm 100vP and the negative arm 100vN is connected to a V-phase terminal of the transformer 3.

The leg circuit 100w has a positive arm 100wP and a negative arm 100wN as a pair of arms, and the positive arm 100wP and the negative arm 100wN are connected in series to each other. One end of the positive arm 100wP is connected to the positive DC terminal 6P, and one end of the negative arm 100wN is connected to the negative DC terminal 6N. A connection point 4w between the positive arm 100wP and the negative arm 100wN is connected to a W-phase terminal of the transformer 3.

Hereinafter, a configuration of each leg circuit 100u, 100v, 100w will be described. The leg circuits 100v and 100w for V phase and W phase have the same configuration as the leg circuit 100u for U phase, and therefore the leg circuit 100u for U phase will be described as a representative.

The positive arm 100uP of the leg circuit 100u includes a plurality of converter cells 111 connected in series and a reactor 112uP, and the plurality of converter cells 111 and the reactor 112uP are connected in series to each other. Similarly, the negative arm 100uN of the leg circuit 100u includes a plurality of converter cells 111 connected in series and a reactor 112uN, and the converter cells 111 and the reactor 112uN are connected in series to each other. The number of the converter cells 111 in each arm may be one.

The reactor 112uP may be provided at any position in the positive arm 100uP, and also, the reactor 112uN may be provided at any position in the negative arm 100uN. The inductance values of the reactors 112uP and 112uN may be different from each other, or may be combined with reactors for other phases. The reactor 112uP may be provided only in the positive arm 100uP, or the reactor 112uN may be provided only in the negative arm 100uN.

In the following description, when the positive arms 100uP, 100vP, 100wP and the negative arms 100uN, 100vN, 100wN need not be discriminated from each other, they are referred to as arms 100, or positive arms 100P and negative arms 100N.

Hereinafter, a configuration of the converter cell 111 composing each leg circuit 100u, 100v, 100w will be described.

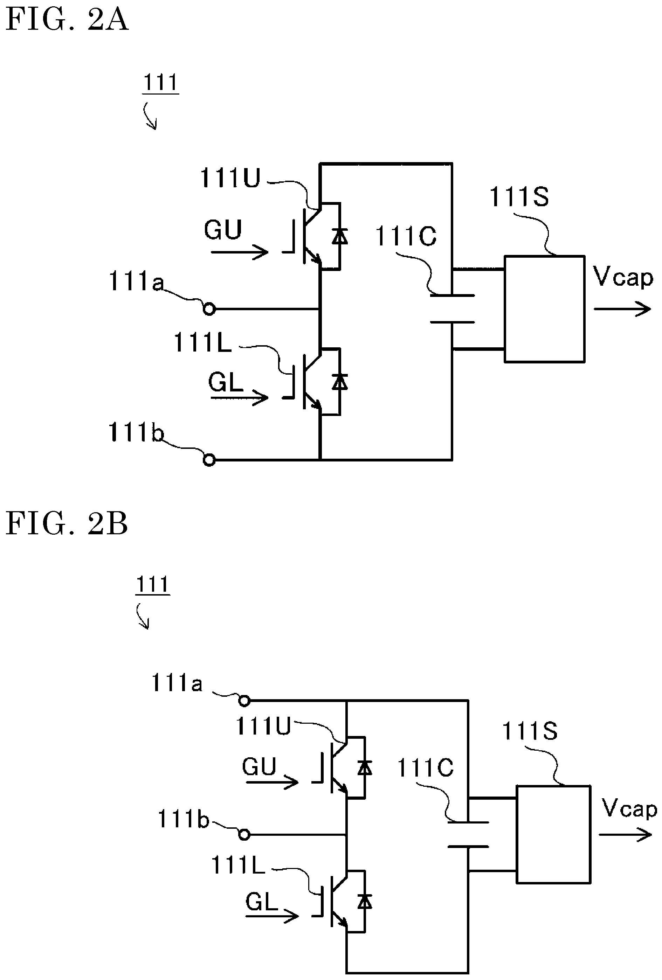

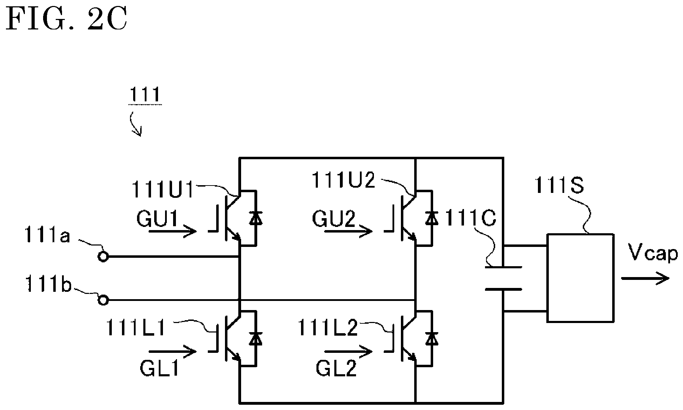

FIG. 2A is a circuit diagram showing an example of a configuration of the converter cell 111 according to embodiment 1. FIG. 2B is a circuit diagram showing a configuration example of the converter cell 111 according to embodiment 1, different from FIG. 2A. FIG. 2C is a circuit diagram showing a configuration example of the converter cell 111 according to embodiment 1, different from FIG. 2A and FIG. 2B.

The converter cells 111 may have any of the circuit configurations shown in FIG. 2A to FIG. 2C, and the circuit configurations may be combined in the positive arm 100uP and the negative arm 100uN.

The converter cell 111 shown in FIG. 2A includes a series unit of semiconductor switching elements 111U, 111L connected in series to each other, a DC capacitor 111C as an energy storage element connected in parallel to the series unit, and a voltage sensor 111S for detecting voltage Vcap of the DC capacitor 111C. A connection point between the semiconductor switching elements 111U and 111L is connected to an input/output terminal 111a on the positive side, and a connection point between the semiconductor switching element 111L and the DC capacitor 111C is connected to an input/output terminal 111b on the negative side.

In the converter cell 111 having the configuration shown in FIG. 2A, the semiconductor switching elements 111U, 111L are controlled by gate signals GU, GL so that one of the semiconductor switching elements 111U, 111L is turned ON and another one is turned OFF. When the semiconductor switching element 111U is ON and the semiconductor switching element 111L is OFF, voltage across the DC capacitor 111C is applied between the input/output terminals 111a and 111b. Positive-side voltage is applied on the input/output terminal 111a side, and negative-side voltage is applied on the input/output terminal 111b side.

The converter cell 111 shown in FIG. 2B includes a series unit of semiconductor switching elements 111U, 111L connected in series to each other, a DC capacitor 111C as an energy storage element connected in parallel to the series unit, and a voltage sensor 111S for detecting a voltage value Vcap of the DC capacitor 111C. A connection point between the semiconductor switching elements 111U and 111L is connected to an input/output terminal 111b on the negative side, and a connection point between the semiconductor switching element 111U and the DC capacitor 111C is connected to an input/output terminal 111a on the positive side.

In the converter cell 111 having the configuration shown in FIG. 2B, the semiconductor switching elements 111U, 111L are controlled by gate signals GU, GL so that one of the semiconductor switching elements 111U, 111L is turned ON and another one is turned OFF. When the semiconductor switching element 111U is OFF and the semiconductor switching element 111L is ON, voltage across the DC capacitor 111C is applied between the input/output terminals 111a and 111b. Positive-side voltage is applied on the input/output terminal 111a side, and negative-side voltage is applied on the input/output terminal 111b side.

The converter cell 111 shown in FIG. 2C includes a series unit of semiconductor switching elements 111U1, 111L1 connected in series to each other, a series unit of semiconductor switching elements 111U2, 111L2 which are also connected in series to each other, a DC capacitor 111C as an energy storage element, and a voltage sensor 111S for detecting voltage Vcap of the DC capacitor 111C. The series unit of the semiconductor switching elements 111U1, 111L1, the series unit of the semiconductor switching elements 111U2, 111L2, and the DC capacitor 111C are connected in parallel to each other.

In the converter cell 111 having the configuration shown in FIG. 2C, the semiconductor switching elements 111U1, 111L1 are controlled by gate signals GU1, GL1 so that one of the semiconductor switching elements 111U1, 111L1 is turned ON and another one is turned OFF. Similarly, the semiconductor switching elements 111U2, 111L2 are controlled by gate signals GU2, GL2 so that one of the semiconductor switching elements 111U2, 111L2 is turned ON and another one is turned OFF. When the semiconductor switching element 111U1 is ON and the semiconductor switching element 111L1 is OFF, and when the semiconductor switching element 111U2 is OFF and the semiconductor switching element 111L2 is ON, voltage across the DC capacitor 111C is applied between input/output terminals 111a and 111b. Positive-side voltage is applied on the input/output terminal 111a, and negative-side voltage is applied on the input/output terminal 111b side.

The power conversion device 1 includes a plurality of detectors for detecting voltages and currents in the power converter 10, in addition to the voltage sensors 111S for detecting the DC capacitor voltages Vcap described above.

As shown in FIG. 1, the control device 20 receives values detected by the above detectors. That is, phase voltages Vacu, Vacv, Vacw at the AC end of the power converter 10, currents Iacu, Iacv, Iacw at the AC end, DC voltage Vdc between the positive DC terminal 6P and the negative DC terminal 6N, DC current Idc flowing through the positive DC terminal 6P or the negative DC terminal 6N, currents IuP, IvP, IwP flowing through the positive arms 100uP, 100vP, 100wP, currents IuN, IvN, IwN flowing through the negative arms 100uN, 100vN, 100wN, and voltages Vcap of the DC capacitors 111C, are inputted to the control device 20.

Next, a configuration of the control device 20 will be described.

The control device 20 generates gate signals GU, GL for driving the semiconductor switching elements 111U, 111L in the converter cell 111 of each of the power converter 10, on the basis of detection values detected by the detectors.

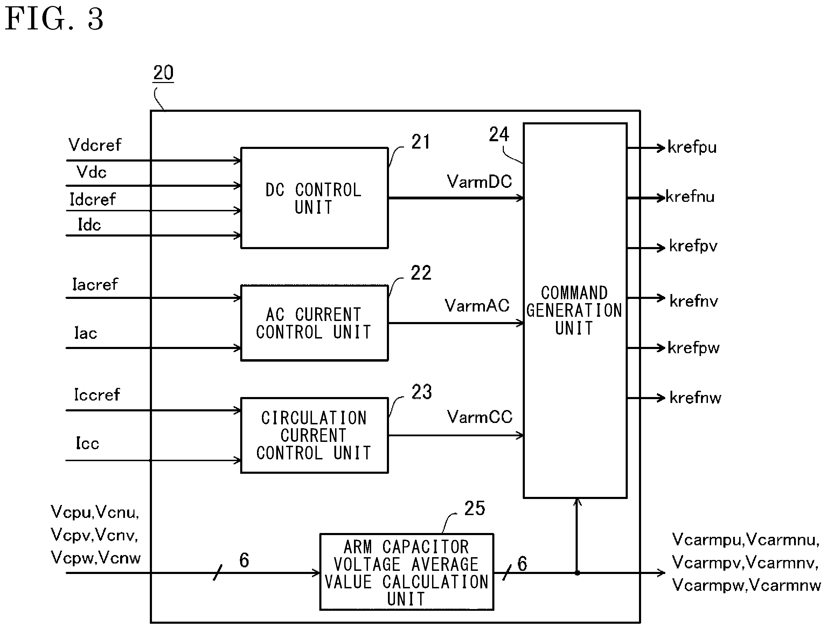

FIG. 3 is a function block diagram showing a configuration of a major part of the control device 20 according to embodiment 1. As shown in FIG. 3, the control device 20 includes a DC control unit 21, an AC current control unit 22, a circulation current control unit 23, a command value generation unit 24, and an arm capacitor voltage average value calculation unit 25.

The DC control unit 21 receives the DC voltage Vdc between the positive DC terminal 6P and the negative DC terminal 6N of the power converter 10, and the DC current Idc flowing through the positive DC terminal 6P or the negative DC terminal 6N. In addition, the DC control unit 21 receives a DC voltage command value Vdcref and a DC current command value Idcref. The DC control unit 21 outputs an arm DC-component voltage command value VarmDC so as to cause the DC voltage Vdc to follow the DC voltage command value Vdcref or cause the DC current Idc to follow the DC current command value Idcref.

The AC current control unit 22 receives AC currents Iac (when currents Iacu, Iacv, Iacw at the AC end are collectively mentioned, they are referred to as AC currents Iac) at the AC end of the power converter 10, and AC voltage command values Iacref (the AC voltage command values Iacref refer to AC voltage command values for U phase, V phase, and W phase, collectively) for controlling AC voltages for the respective phases. The AC current control unit 22 outputs an arm AC-component voltage command value VarmAC so as to cause each AC current Iac to follow the AC current command value Iacref.

The circulation current control unit 23 outputs an arm circulation voltage command value Varmcc for performing control so as to cause circulation current Icc to follow a circulation current command value Iccref for balancing, among the arms 100, voltages of the DC capacitors 111C included in the arms 100. Here, the circulation current Icc is current flowing among the leg circuits 100u, 100v, 100w for the respective phases without flowing to the AC end and the DC end, in the power converter 10.

The arm capacitor voltage average value calculation unit 25 calculates the average value of voltages of the DC capacitors in each arm. The arm capacitor voltage average value calculation unit 25 receives in-arm capacitor total values Vcpu, Vcnu, Vcpv, Vcnv, Vcpw, Vcnw obtained by summing the voltages Vcap of the DC capacitors 111C in the converter cells 111 included in the arms, and outputs average values Vcarmpu, Vcarmnu, Vcarmpv, Vcarmnv, Vcarmpw, Vcarmnw of arm capacitor voltages obtained by dividing each capacitor total value by a number N (N is an integer not less than 1) of the converter cells included in each arm. When the in-arm capacitor total values are collectively mentioned, they are referred to as in-arm capacitor voltage total values Vc, and when the arm capacitor voltage average values are collectively mentioned, they are referred to as in-arm capacitor voltage average values Vcarm.

The command value generation unit 24 receives the arm DC-component voltage command value VarmDC from the DC control unit 21, the arm AC-component voltage command value VarmAC from the AC current control unit 22, the arm circulation voltage command value Varmcc from the circulation current control unit 23, and the average value Vcarm of capacitor voltages in each arm from the arm capacitor voltage average value calculation unit 25. Although the details of the command value generation unit 24 are described later, the command value generation unit 24 outputs modulation commands kref for the respective arms (the modulation commands kref for the arms refer to modulation commands krefpu, krenu, krefpv, krefnv, krefpw, krenw for the respective arms, collectively).

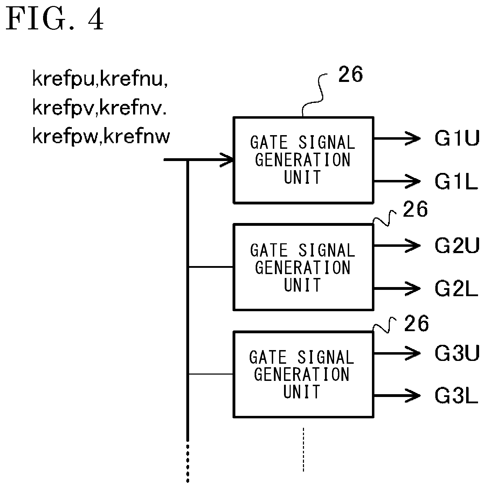

FIG. 4 shows a state in which the modulation commands kref for the respective arms generated and outputted by the command value generation unit 24 are inputted to gate signal generation units 26. The gate signal generation units 26 receive the modulation commands kref for the respective arms, and generate gate signals G (G1U, G1L, G2U, G2L, G3U, G3L, ...) for driving the semiconductor switching elements 111U, 111L included in all the converter cells 111 of the corresponding arms 100. Each gate signal generation unit 26 obtains the gate signals G through pulse width modulation (PWM) in which the magnitudes of the inputted modulation command kref for the arm and a carrier wave are compared with each other, for example.

The plurality of gate signal generation units 26 may be provided at a stage subsequent to the command value generation unit 24, in the control device 20. Alternatively, the gate signal generation units 26 may be included in the respective converter cells 111.

Next, a configuration of the command value generation unit 24 will be described.

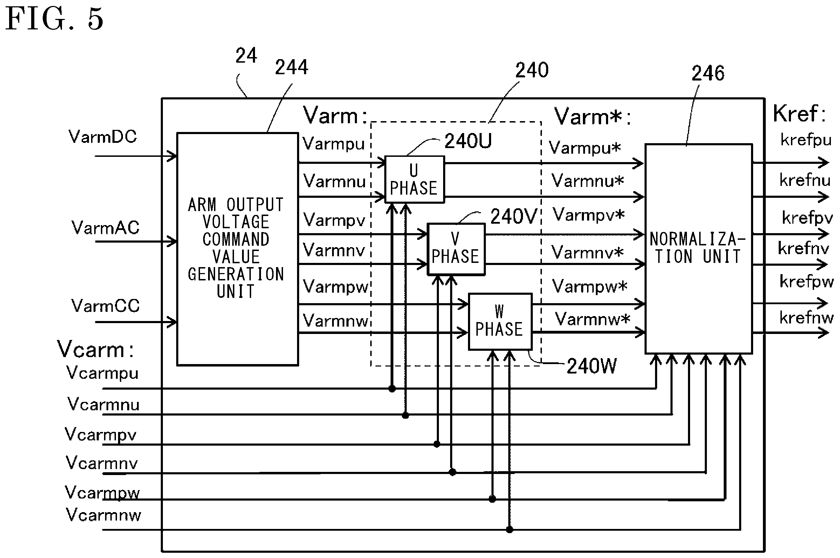

FIG. 5 is a function block diagram showing a configuration of the command generation unit 24. As shown in FIG. 5, the command value generation unit 24 includes an arm output voltage command value generation unit 244, a voltage command value correction unit 240, and a normalization unit 246.

The arm output voltage command value generation unit 244 receives the arm DC-component voltage command value VarmDC, the arm AC-component voltage command value VarmAC, and the arm circulation voltage command value Varmcc, calculates voltages to be outputted from the respective arms, and outputs the calculated voltages as arm output voltage command values Varmpu, Varmnu, Varmpv, Varmnv, Varmpw, Varmnw.

The voltage command value correction unit 240 includes voltage command value correction units 240U, 240V, 240W for the respective phases, and corrects the voltages to be outputted from the arms, by referring to the in-arm capacitor voltage average values Vcarm (or using the in-arm capacitor voltage total value Vc which is calculated as Vc = Vcarm×N), thus correcting the arm output voltage command values.

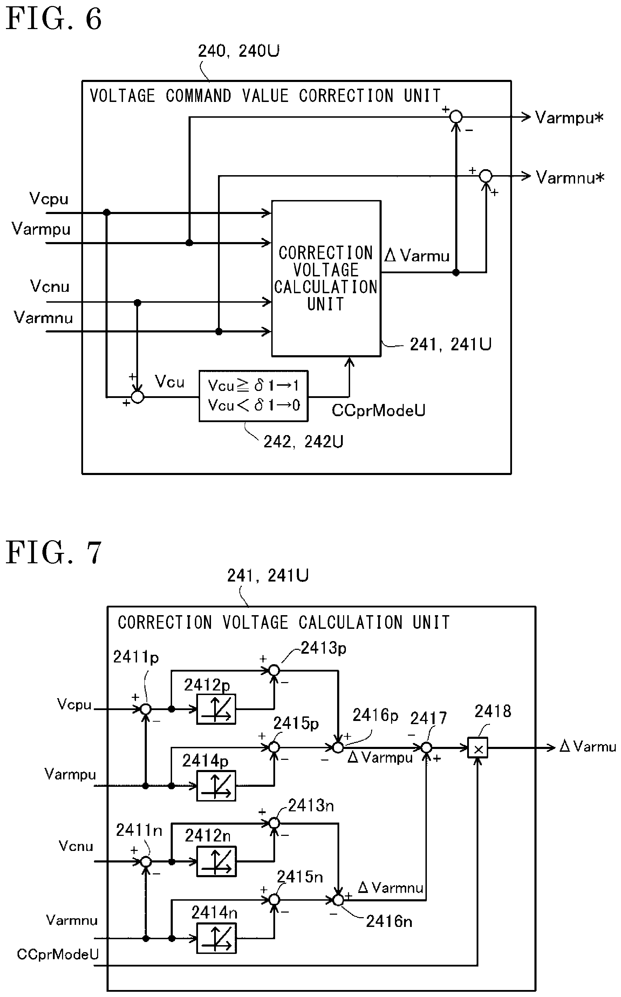

FIG. 6 shows a configuration of the voltage command value correction unit 240 included in the command generation unit 24. As shown in FIG. 6, the voltage command value correction unit 240 includes a correction voltage calculation unit 241. FIG. 7 shows a configuration of the correction voltage calculation unit 241. In FIG. 6 and FIG. 7, a U-phase voltage command value correction unit 240U is shown as an example of the voltage command value correction unit.

A correction voltage calculation unit 241U of the U-phase voltage command value correction unit 240U receives the positive arm output voltage command value Varmpu, the negative arm output voltage command value Varmnu, the positive in-arm capacitor voltage total value Vcpu, the negative in-arm capacitor voltage total value Vcnu, and a determination signal CCprModeU indicating whether or not the power converter 10 is in a circulation current priority mode.

In the correction voltage calculation unit 241, adders 2411p, 2413p, 2415p, 2416p, 2417, 2411n, 2413n, 2415n, 2416n add inputted signals and output the resultant signals, and filters 2412p, 2414p, 2412n, 2414n each output 0 when an input signal is equal to or smaller than 0, and output the value of the input signal when the input signal is greater than 0. A multiplier 2418 receives CCprModeU indicating 1 when the power converter 10 is in the circulation current priority mode, or CCprModeU indicating 0 when the power converter 10 is not in the circulation current priority mode.

Here, the circulation current priority mode is a mode in which, when the total value of all the capacitor voltages included in one leg circuit has become equal to or greater than a predetermined threshold (δ1) and overmodulation occurs for the arm included in the leg circuit, the output voltage of the arm is corrected so as to prioritize output for circulation current control. As shown in FIG. 6, the U-phase voltage command value correction unit 240U receives arm capacitor voltage average values Vcarmpu, Vcarmnu. That is, the positive in-arm capacitor voltage total value Vcpu and the negative in-arm capacitor voltage total value Vcnu are inputted. Then, a U-phase capacitor voltage total value Vcu (= Vcpu + Vcnu) obtained by adding both total values is compared with the threshold (δ1) in a filter 242U, and if the U-phase capacitor voltage total value Vcu is equal to or greater than the threshold (δ1), the determination signal CCprModeU for the circulation current priority mode is outputted as 1. In the filter 242U, if the U-phase capacitor voltage total value Vcu is smaller than the threshold (δ1), the determination signal CCprModeU for the circulation current priority mode is outputted as 0. As described above, whether or not to apply the circulation current priority mode is determined, and the determination signal CCprModeU for the circulation current priority mode is outputted.

In a case where the determination signal CCprModeU for the circulation current priority mode is 0, in FIG. 5, the arm output voltage command value generation unit 244 generates the arm output voltage command values Varm without taking the arm circulation voltage command value Varmcc into consideration.

It is desirable that the threshold (δ1) is set to be equal to or greater than 1/2 of the DC voltage Vdc between the positive DC terminal 6P and the negative DC terminal 6N of the power converter 10. The reason is as follows. If the total value of all the capacitor voltages included in one leg circuit is smaller than 1/2 of the voltage Vdc between the DC terminals, charging needs to be performed for all the capacitor voltages, and meanwhile, if correction for prioritizing circulation current output is performed, the grid side (AC side) is influenced, so that charging cannot be performed sufficiently.

In the following five cases, operation of the correction voltage calculation unit 241U will be described.
(1) In the positive arm, in a case where the positive in-arm capacitor voltage total value Vcpu is greater than the positive arm output voltage command value Varmpu (Vcpu > Varmpu) and the negative in-arm capacitor voltage total value Vcnu is greater than the negative arm output voltage command value Varmnu (Vcnu > Varmnu), i.e., in a case where overmodulation does not occur, the positive arm output voltage command correction value ΔVarmpu outputted from the adder 2416p and the negative arm output voltage command correction value ΔVarmnu outputted from the adder 2416n are both 0, and the voltage command correction value ΔVarmu = 0 is outputted from the correction voltage calculation unit 241.
(2) In the positive arm, in a case where the positive arm output voltage command value Varmpu is greater than the positive in-arm capacitor voltage total value Vcpu (Vcpu < Varmpu) so that overmodulation has occurred, the positive arm output voltage command correction value ΔVarmpu (≠ 0) is outputted from the adder 2416p. At this time, if the capacitor voltage total value (Vcpu + Vcnu) in the leg circuit 100u for U phase is greater than the predetermined threshold δ1, the signal CCprModeU indicating 1 is inputted to the multiplier 2418, and the voltage command correction value ΔVarmu is outputted. On the other hand, if the capacitor voltage total value (Vcpu + Vcnu) in the leg circuit 100u for U phase is equal to or smaller than the predetermined threshold δ1, it is determined that there is a margin for the capacitor voltages. Thus, the signal CCprModeU indicating 0 is inputted to the multiplier 2418, and the voltage command correction value ΔVarmu = 0 is outputted from the correction voltage calculation unit 241.
(3) Similarly, in the negative arm, in a case where the negative arm output voltage command value Varmnu is greater than the negative in-arm capacitor voltage total value Vcnu (Vcnu < Varmnu) so that overmodulation has occurred, the negative arm output voltage command correction value ΔVarmnu (≠ 0) is outputted from the adder 2416n. At this time, if the capacitor voltage total value (Vcpu + Vcnu) in the leg circuit 100u for U phase is greater than the predetermined threshold δ1, the signal CCprModeU indicating 1 is inputted to the multiplier 2418, and the voltage command correction value ΔVarmu is outputted. On the other hand, if the capacitor voltage total value (Vcpu + Vcnu) in the leg circuit 100u for U phase is equal to or smaller than the predetermined threshold δ1, it is determined that there is a margin for the capacitor voltages. Thus, the signal CCprModeU indicating 0 is inputted to the multiplier 2418, and the voltage command correction value ΔVarmu = 0 is outputted from the correction voltage calculation unit 241.
(4) In the positive arm, in a case where the positive arm output voltage command value Varmpu is smaller than 0 (Varmpu < 0), the positive arm output voltage command correction value ΔVarmpu (≠ 0) is outputted from the adder 2416p. At this time, if the capacitor voltage total value (Vcpu + Vcnu) in the leg circuit 100u for U phase is greater than the predetermined threshold δ1, the signal CCprModeU indicating 1 is inputted to the multiplier 2418, and the voltage command correction value ΔVarmu is outputted. On the other hand, if the capacitor voltage total value (Vcpu + Vcnu) in the leg circuit 100u for U phase is equal to or smaller than the predetermined threshold δ1, it is determined that there is a margin for the capacitor voltages. Thus, the signal CCprModeU indicating 0 is inputted to the multiplier 2418, and the voltage command correction value ΔVarmu = 0 is outputted from the correction voltage calculation unit 241.
(5) In the negative arm, in a case where the negative arm output voltage command value Varmnu is smaller than 0 (Varmnu < 0), the negative arm output voltage command correction value ΔVarmnu (≠ 0) is outputted from the adder 2416n. At this time, if the capacitor voltage total value (Vcpu + Vcnu) in the leg circuit 100u for U phase is greater than the predetermined threshold δ1, the signal CCprModeU indicating 1 is inputted to the multiplier 2418, and the voltage command correction value ΔVarmu is outputted. On the other hand, if the capacitor voltage total value (Vcpu + Vcnu) in the leg circuit 100u for U phase is equal to or smaller than the predetermined threshold δ1, it is determined that there is a margin for the capacitor voltages, and the signal CCprModeU indicating 0 is inputted to the multiplier 2418, and the voltage command correction value ΔVarmu = 0 is outputted from the correction voltage calculation unit 241.

That is, in the correction voltage calculation unit 241, in a case where the arm output voltage command value on one side for a corresponding phase is greater than the arm capacitor voltage total value on the one side, and in a case where the arm output voltage command value is smaller than 0 V, if the circulation current priority mode is applied, correction voltage is outputted.

As shown in FIG. 6, the voltage command correction value ΔVarmpu outputted from the correction voltage calculation unit 241 is subtracted from the positive arm output voltage command value Varmpu, and thus a corrected positive arm output voltage command value Varmpu* is outputted. The voltage command correction value ΔVarmpu is added to the negative arm output voltage command value Varmnu, and thus a corrected negative arm output voltage command value Varmnu* is outputted.

The corrected arm output voltage command values Varmpu*, Varmnu*, Varmpv*, Varmnv*, Varmpw*, Varmnw* (when collectively mentioned, they are referred to as arm output voltage command values Varm*) for the respective phases outputted from the voltage command value correction unit 240 are inputted to the normalization unit 246.

In FIG. 5, the normalization unit 246 normalizes the corrected output voltage command values for the respective arms outputted from the voltage command value correction unit 240, on the basis of the capacitor voltage total values in the respective arms, and outputs modulation commands kref for the respective arms.

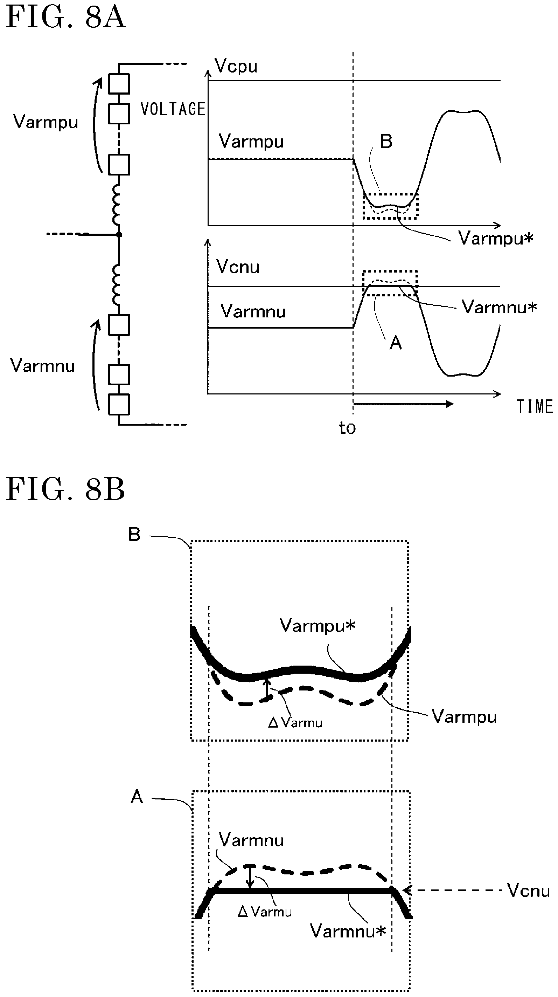

As described above in FIG. 6 and FIG. 7, the arm output voltage command values are corrected using the voltage command correction value ΔVarmu calculated by the correction voltage calculation unit 241. Then, the details of the correction and effects thereof will be described with reference to FIG. 8A and FIG. 8B. FIG. 8A illustrates effects of the power conversion device according to embodiment 1, and FIG. 8B is an enlarged view showing regions enclosed by dotted lines A and B in FIG. 8A.

FIG. 8A shows behaviors of the positive in-arm capacitor voltage total value Vcpu, the positive arm output voltage command value Varmpu, the negative in-arm capacitor voltage total value Vcnu, and the negative arm output voltage command value Varmnu, regarding the leg circuit 100u for U phase. A fault occurs at time t0, and immediately after that, overmodulation occurs. At this time, for the negative arm, the negative arm output voltage command value Varmnu increases and thus becomes greater than the negative in-arm capacitor voltage total value Vcnu. This period is indicated in the region of dotted line A in FIG. 8A. On the other hand, for the positive arm, the positive arm output voltage command value Varmpu does not exceed the positive in-arm capacitor voltage total value Vcpu even if the positive arm output voltage command value Varmpu oscillates. A region for the positive arm during the same period corresponding to the region of dotted line A for the negative arm is indicated by dotted line B. Here, the leg circuit 100u for U phase is in the circulation current priority mode. In addition, as described in FIG. 7, regarding the positive arm, an upper threshold for the positive arm output voltage command value Varmpu is the positive in-arm capacitor voltage total value Vcpu, and regarding the negative arm, an upper threshold for the negative arm output voltage command value Varmnu is the negative in-arm capacitor voltage total value Vcnu. Lower thresholds are 0 V for both arms.

In FIG. 8B, the negative arm output voltage command value Varmnu exceeds the negative in-arm capacitor voltage total value Vcnu in the region of dotted line A. The negative arm output voltage command value Varmnu exceeding the negative in-arm capacitor voltage total value Vcnu is indicated by a broken line. Here, the negative arm output voltage command value Varmnu is corrected by the voltage command correction value ΔVarmu so as to fall within a range not exceeding the negative in-arm capacitor voltage total value Vcnu. The corrected negative arm output voltage command value Varmnu* becomes equal to the negative in-arm capacitor voltage total value Vcnu.

Meanwhile, since the circulation current priority mode is applied, for the corresponding positive arm, correction is performed with the voltage command correction value ΔVarmu so that the output voltage total value in the leg circuit 100u becomes equal between before and after correction, so as to balance the capacitor voltages on the positive and negative sides. Thus, the positive arm output voltage command value Varmpu indicated by a broken line in the region of dotted line B becomes the corrected positive arm output voltage command value Varmpu* indicated by a solid line.

As described above, in the case of the circulation current priority mode, using correction voltage, output voltage of an arm on a side where overmodulation has occurred is corrected to be equal to the output range corresponding to the total value of the capacitor voltages, and output voltage of the arm on the other side is also corrected, whereby correction is performed so that the output voltage total value for the two arms in one leg circuit does not change between before and after correction. Thus, circulation current can be controlled as desired even in a case of overmodulation.

As described above, according to the present embodiment 1, the power conversion device includes: a power converter which performs power conversion between multiphase AC and DC and in which a plurality of leg circuits each having a positive arm and a negative arm connected in series are connected in parallel and connection points between the positive arms and the negative arms of the plurality of leg circuits are connected to AC lines for respective phases; and a control device which controls the power converter. Each arm includes converter cells connected in series and each having a series unit in which a plurality of semiconductor switching elements are connected in series and a DC capacitor connected in parallel to the series unit. The control device includes an arm output voltage command value generation unit which generates arm output voltage command values which are command values for voltages to be outputted by a plurality of the arms. Circulation current control is performed for each of the leg circuits. When a total value of voltages of all the DC capacitors included in at least one of the leg circuits is equal to or greater than a predetermined first threshold (δ1), correction voltage for correcting the arm output voltage command values is generated to perform correction so that, if the arm output voltage command value for one arm in the leg circuit is greater than a predetermined upper threshold, the arm output voltage command value becomes equal to or smaller than the upper threshold, and if the arm output voltage command value is smaller than a lower threshold, the arm output voltage command value becomes equal to or greater than the lower threshold. Also, the arm output voltage command value for another arm is corrected on the basis of the correction voltage. With this configuration, the output voltage command values for both arms are corrected by the correction voltage, whereby it becomes possible to equalize the total value of voltages to be outputted and circulation current control can be easily performed. Thus, when the capacitor voltages are unbalanced between the arms during a fault or immediately after recovery from a fault, the capacitor voltages can be swiftly balanced.

In addition, in a case of being equal to or greater than the first threshold, the circulation current priority mode is applied and the output voltage of the arm on which overmodulation has occurred is corrected so as to prioritize output for circulation current control. Thus, the function is exerted only when the capacitor voltages are equal to or greater than a certain level, whereby effects can be provided for only imbalance of the capacitor voltages between the arms. If the first threshold is set to be equal to or greater than 1/2 of the DC voltage of the power converter, the output voltages of the arms can be corrected so as to prioritize circulation current control output only when needed for imbalance of the capacitor voltages between the arms.

The output possible range of the arm output voltage is 0 V to the total value of the capacitor voltages of the arm, and therefore, if the upper threshold for performing overmodulation is set to be the total value of the capacitor voltages of the arm and the upper threshold is set at 0 V, the range of the arm output voltage can be maximized.

### Embodiment 2

Hereinafter, a power conversion device according to embodiment 2 will be described with reference to the drawings.

The power conversion device according to embodiment 2 includes the same control device 20 as in FIG. 3, but a configuration of the command generation unit 24 is different from that in embodiment 1. Hereinafter, difference from embodiment 1 will be mainly described and the description of corresponding parts is omitted.

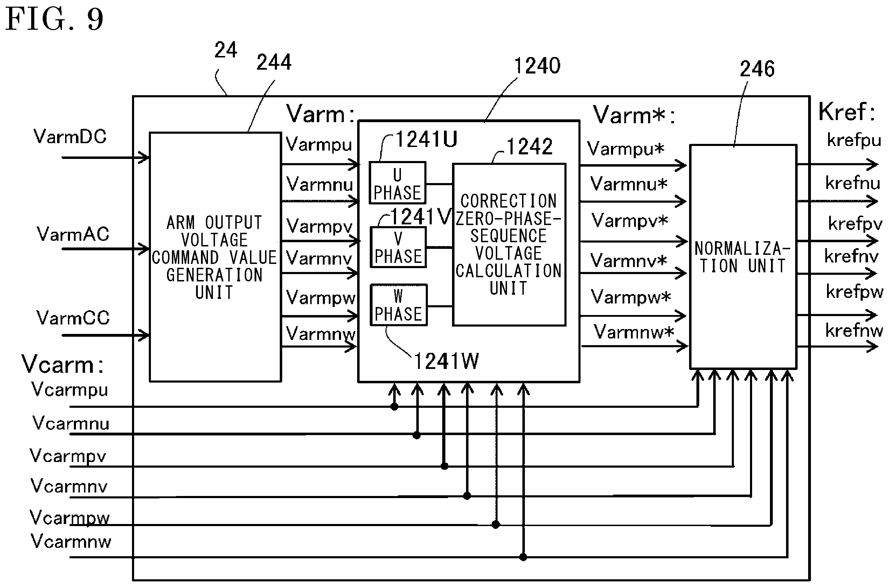

FIG. 9 is a function block diagram showing a configuration of the command generation unit 24 included in the control device 20 according to embodiment 2. As shown in FIG. 9, the command generation unit 24 includes the arm output voltage command value generation unit 244, a voltage command value correction unit 1240, and the normalization unit 246. The arm output voltage command value generation unit 244 and the normalization unit 246 are the same as those shown in FIG. 5 in embodiment 1.

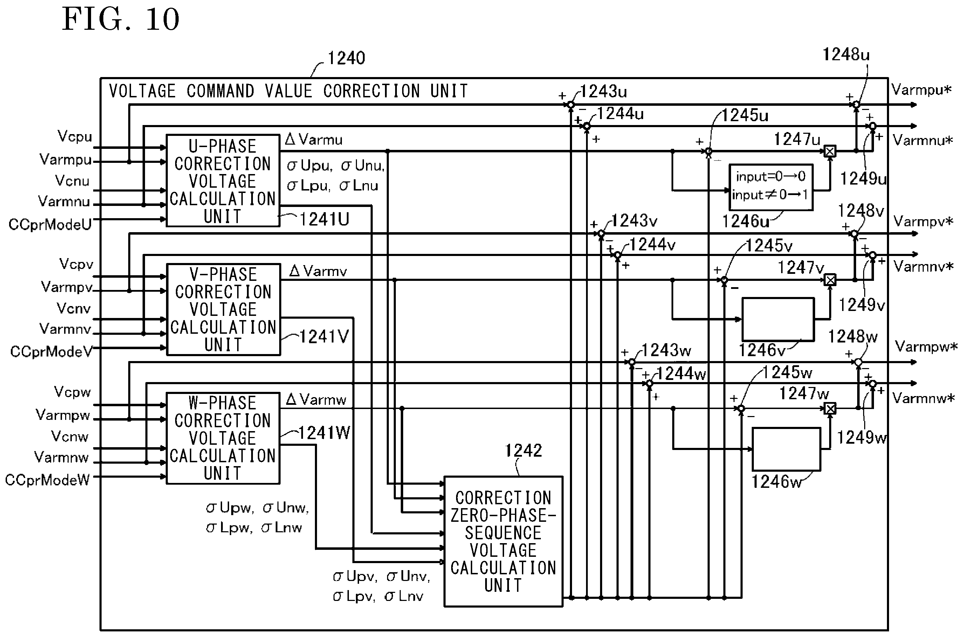

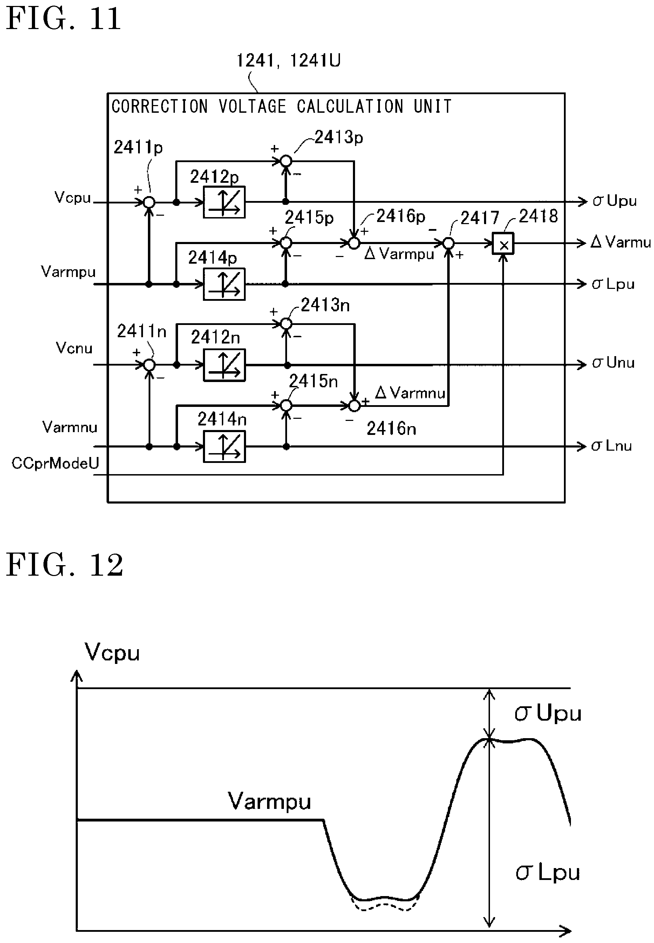

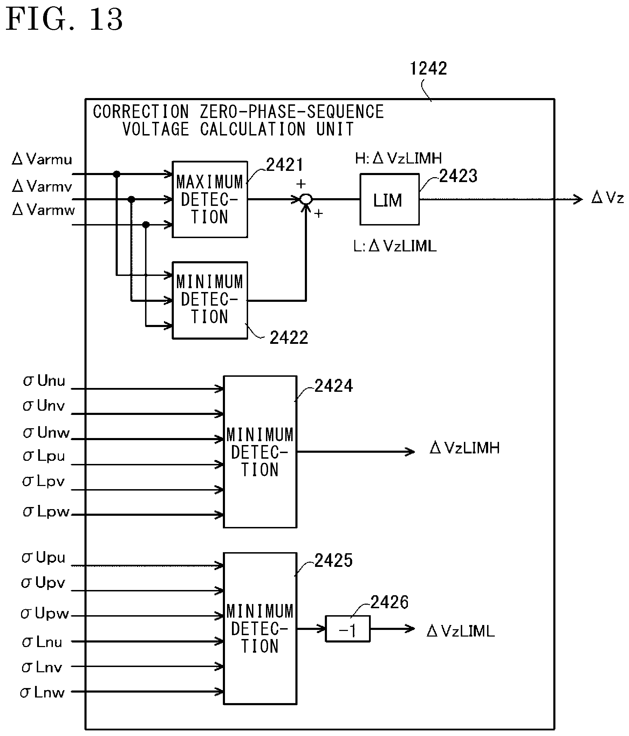

FIG. 10 shows a configuration of the voltage command value correction unit 1240. As shown in FIG. 10, the voltage command value correction unit 1240 includes correction voltage calculation units 1241 for the respective phases, i.e., a U-phase correction voltage calculation unit 1241U, a V-phase correction voltage calculation unit 1241V, and a W-phase correction voltage calculation unit 1241W, a correction zero-phase-sequence voltage calculation unit 1242, and calculators. FIG. 11 shows a configuration of the correction voltage calculation unit 1241 for each phase, and FIG. 13 shows a configuration of the correction zero-phase-sequence voltage calculation unit 1242. The correction voltage calculation units 1241 refer to the U-phase correction voltage calculation unit 1241U, the V-phase correction voltage calculation unit 1241V, and the W-phase correction voltage calculation unit 1241W, collectively.

First, a configuration of the correction voltage calculation unit 1241 for each phase will be described. Here, the correction voltage calculation unit 1241 in FIG. 11 is the U-phase correction voltage calculation unit 1241U, and the description will be given using signals for U phase. The correction voltage calculation unit 1241 in FIG. 11 is similar to the configuration of the correction voltage calculation unit 241 for each phase shown in FIG. 7 in embodiment 1, and input signals are the same but output signals are partially different.

In FIG. 11, the U-phase correction voltage calculation unit 241U receives the positive arm output voltage command value Varmpu, the negative arm output voltage command value Varmnu, the positive in-arm capacitor voltage total value Vcpu, the negative in-arm capacitor voltage total value Vcnu, and the determination signal CCprModeU indicating whether or not the power converter 10 is in the circulation current priority mode. In FIG. 10 and FIG. 11, the determination signal CCprModeU is inputted. The determination signal CCprModeU is generated by comparing the total value Vcu of the positive in-arm capacitor voltage total value Vcpu and the negative in-arm capacitor voltage total value Vcnu with the threshold (δ1) as described in FIG. 6 in embodiment 1. In FIG. 10 and FIG. 11, generation of the determination signal CCprModeU is not shown.

In the U-phase correction voltage calculation unit 1241U, adders 2411p, 2413p, 2416p, 2417, 2411n, 2413n, 2415n, 2416n output differences between inputted signals, and filters 2412p, 2414p, 2412n, 2414n each output 0 when an input signal is equal to or smaller than 0, and output the value of the input signal when the input signal is greater than 0. A multiplier 2418 receives 1 when the power converter 10 is in the circulation current priority mode, or 0 when the power converter 10 is not in the circulation current priority mode. Here, the circulation current priority mode is a mode in which, when the total value of all the capacitor voltages included in one leg circuit has become equal to or greater than a predetermined threshold, control is performed so that the circulation current follows the circulation current command value, so as to balance the output voltages of the positive and negative arms in the leg circuit.

The following cases (1) to (5) are the same as in FIG. 7 in embodiment 1, and the description thereof is simplified.
(1) In the positive arm, in a case where the positive in-arm capacitor voltage total value Vcpu is greater than the positive arm output voltage command value Varmpu (Vcpu > Varmpu) and the negative in-arm capacitor voltage total value Vcnu is greater than the negative arm output voltage command value Varmnu (Vcnu > Varmnu), i.e., in a case where overmodulation does not occur, the voltage command correction value ΔVarmu = 0 is outputted.
(2) In the positive arm, in a case where the positive arm output voltage command value Varmpu is greater than the positive in-arm capacitor voltage total value Vcpu (Vcpu < Varmpu) so that overmodulation has occurred, the voltage command correction value ΔVarmu (≠ 0) is outputted when the signal CCprModeU indicates 1. On the other hand, when the signal CCprModeU indicates 0, the voltage command correction value ΔVarmu = 0 is outputted.
(3) Similarly, in the negative arm, in a case where the negative arm output voltage command value Varmnu is greater than the negative in-arm capacitor voltage total value Vcnu (Vcnu < Varmnu) so that overmodulation has occurred, the voltage command correction value ΔVarmu (≠ 0) is outputted when the signal CCprModeU indicates 1. On the other hand, when the signal CCprModeU indicates 0, the voltage command correction value ΔVarmu = 0 is outputted.
(4) In the positive arm, in a case where the positive arm output voltage command value Varmpu is smaller than 0 (Varmpu < 0), the voltage command correction value ΔVarmu (≠ 0) is outputted when CCprModeU indicates 1. On the other hand, when the signal CCprModeU indicates 0, the voltage command correction value ΔVarmu = 0 is outputted.
(5) In the negative arm, in a case where the negative arm output voltage command value Varmnu is smaller than 0 (Varmnu < 0), the voltage command correction value ΔVarmu (≠ 0) is outputted when the signal CCprModeU indicates 1. On the other hand, when the signal CCprModeU indicates 0, the voltage command correction value ΔVarmu = 0 is outputted.

That is, in the correction voltage calculation unit 1241, in a case where the arm output voltage command value on one side for a corresponding phase is greater than the arm capacitor voltage total value on the one side, or in a case where the arm output voltage command value is smaller than 0 V, if the circulation current priority mode is applied, the voltage command correction value ΔVarm is outputted.

Further, in the correction voltage calculation unit 1241 of the present embodiment 2, a voltage correction possible range in correction for each arm is calculated as a correction tolerance. FIG. 12 illustrates a correction tolerance for voltage and shows a behavior of the positive arm output voltage command value Varmpu for U phase. In FIG. 12, σUpu is a positive arm upper correction tolerance for U phase, and is a value obtained by dividing the positive arm output voltage command value Varmpu from the positive in-arm capacitor voltage total value Vcpu. In addition, σLpu is a positive arm lower correction tolerance for U phase, and is a value of the positive arm output voltage command value Varmpu. Here, in FIG. 11, these are outputs of the filters 2412p, 2414p, and therefore, when σUpu and σLpu are equal to or smaller than 0, σUpu and σLpu become 0. That is, in the above case (2) where the positive arm output voltage command value Varmpu is greater than the positive in-arm capacitor voltage total value Vcpu so that overmodulation has occurred, the positive arm upper correction tolerance σUpu for U phase is 0. In the above case (4) where the positive arm output voltage command value Varmpu is smaller than 0, the positive arm lower correction tolerance σLpu for U phase is 0.

Similarly, in FIG. 11, a negative arm upper correction tolerance σUnu for U phase and a negative arm lower correction tolerance σLnu for U phase are calculated.

In addition, the other V-phase correction voltage calculation unit 1241V and W-phase correction voltage calculation unit 1241W also output the voltage command correction value ΔVarmv and correction tolerances σUpv, σLpv, σUnv, σLnv, and the voltage command correction value ΔVarmw and correction tolerances σUpw, σLpw, σUnw, σLnw, respectively.

Next, with reference to FIG. 13, the correction zero-phase-sequence voltage calculation unit 1242 will be described. As shown in FIG. 13, the correction zero-phase-sequence voltage calculation unit 1242 receives the correction voltages and the correction tolerances for the respective phases outputted from the correction voltage calculation units 1241 for the respective phases, and outputs a correction zero-phase-sequence voltage ΔVz. In a case where the output voltage command value for any arm needs to be corrected, the correction is performed using the correction zero-phase-sequence voltage ΔVz. Thus, in a case where the grid voltage on the AC side is isolated by a transformer or the like, phase-to-phase voltages do not change and therefore overmodulation can be prevented without influencing the grid side. However, since the zero-phase-sequence voltage is a common component among AC voltages outputted in the respective phases, the correction zero-phase-sequence voltage ΔVz is used for correction of all the arms. Thus, if the correction zero-phase-sequence voltage ΔVz is great, overmodulation might occur on another arm where overmodulation has not occurred. In order to prevent this, in the correction zero-phase-sequence voltage calculation unit 1242 of the present embodiment 2, a limit value for the correction zero-phase-sequence voltage ΔVz is set from the correction tolerances for correction voltages for the respective arms, and the correction zero-phase-sequence voltage ΔVz is calculated accordingly.

By a filter 2421, a maximum value is detected from the voltage command correction values ΔVarmu, ΔVarmv, ΔVarmw for the respective phases inputted to the correction zero-phase-sequence voltage calculation unit 1242, and by a filter 2422, a minimum value is detected. The detected maximum value and minimum value are added, and the resultant value is inputted to a limiter 2423. In the limiter 2423, the input value is limited between a maximum value ΔVzLIMH and a minimum value ΔVzLIML. The maximum value ΔVzLIMH and the minimum value ΔVzLIML in the limiter 2423 are calculated as follows.

In a case where the correction zero-phase-sequence voltage ΔVz is positive, the negative arm upper correction tolerances σUnu, σUnv, σUnw for the respective phases and the positive arm lower correction tolerances σLpu, σLpv, σLpw for the respective phases are in a decrease direction. That is, as a result of correction by the correction zero-phase-sequence voltage ΔVz, any of σUnu, σUnv, σUnw, σLpu, σLpv, σLpw might become equal to or smaller than 0, so that overmodulation might occur on an arm different from the correction arm. Therefore, for the correction zero-phase-sequence voltage ΔVz, a value on the positive side needs to be limited by a minimum value of σUnu, σUnv, σUnw, σLpu, σLpv, σLpw.

Accordingly, by a filter 2424, a minimum value is detected from the negative arm upper correction tolerances σUnu, σUnv, σUnw for the respective phases and the positive arm lower correction tolerances σLpu, σLpv, σLpw for the respective phases among the correction tolerances for the correction voltages for the respective arms inputted to the correction zero-phase-sequence voltage calculation unit 1242, and the detected value is used as the maximum value ΔVzLIMH in the limiter 2423.

In a case where the correction zero-phase-sequence voltage ΔVz is negative, the positive arm upper correction tolerances σUpu, σUpv, σUpw for the respective phases and the negative arm lower correction tolerances σLnu, σLnv, σLnw for the respective phases are in a decrease direction. That is, as a result of correction by the correction zero-phase-sequence voltage ΔVz, any of σUpu, σUpv, σUpw, σLnu, σLnv, σLnw might become equal to or smaller than 0, so that overmodulation might occur on an arm different from the correction arm. Therefore, for the correction zero-phase-sequence voltage ΔVz, a value on the negative side needs to be limited by a value obtained by multiplying the minimum value of σUpu, σUpv, σUpw, σLnu, σLnv, σLnw by -1.

Accordingly, by a filter 2425, a minimum value is detected from the positive arm upper correction tolerances σUpu, σUpv, σUpw for the respective phases and the negative arm lower correction tolerances σLnu, σLnv, σLnw for the respective phases among the correction tolerances for the correction voltages for the arms inputted to the correction zero-phase-sequence voltage calculation unit 1242, and a value obtained by inverting the sign of the detected value by an inversion circuit 2426 is used as the minimum value ΔVzLIML in the limiter 2423.

Returning to the voltage command value correction unit 1240 in FIG. 10, a method for calculating the corrected positive arm output voltage command value Varmpu* and the corrected negative arm output voltage command value Varmnu* will be described in U phase as an example. It is assumed that U phase is a phase in which a correction target arm for overmodulation is included.

First, it is assumed that U phase is a phase in which a correction target arm for overmodulation is included and the other phases are phases in which correction target arms for overmodulation are not included.

The correction zero-phase-sequence voltage ΔVz outputted from the correction zero-phase-sequence voltage calculation unit 1242 is inputted to an adder 1243u and thus is subtracted from the positive arm output voltage command value Varmpu. Meanwhile, the correction zero-phase-sequence voltage ΔVz is added to the negative arm output voltage command value Varmnu by an adder 1244u.

The voltage command correction value ΔVarmu for U phase calculated by the U-phase correction voltage calculation unit 1241U is inputted to a filter 1246u. The filter 1246u outputs 0 when an input value (input) is 0, or outputs 1 when the input value (input) is other than 0, to a multiplier 1247u. By an adder 1245u, the correction zero-phase-sequence voltage ΔVz is subtracted from the voltage command correction value ΔVarmu for U phase, and the resultant value is inputted to a multiplier 1247u. Here, since U phase is a phase in which the correction target arm for overmodulation is included, the voltage command correction value ΔVarmu for U phase is not 0, and therefore an output of the multiplier 1247u is 1. Thus, inputs to adders 1248u, 1249u from 1247u are ΔVarmu - ΔVz.

Accordingly, the voltage command value correction unit 1240 outputs Varmpu - ΔVarmu as the corrected positive arm output voltage command value Varmpu*, and Varmnu + ΔVarmu as the corrected negative arm output voltage command value Varmnu*.

Since correction target arms are not included in the other phases, outputs from 1246v and 1246w are 0. Accordingly, in V phase, the corrected positive arm output voltage command value Varmpv* is Varmpv - ΔVz, and the corrected negative arm voltage output voltage command value Varmnv* is Varmnv + ΔVz. Similarly, in W phase, the corrected positive arm output voltage command value Varmpw* is Varmpw - ΔVz, and the corrected negative arm voltage output voltage command value Varmnw* is Varmpw + ΔVz.

According to the above operation, in a case where the voltage command correction value ΔVarmu for U phase is in a range between the maximum value ΔVzLIMH and the minimum value ΔVzLIML in the correction zero-phase-sequence voltage calculation unit 1242, ΔVz becomes equal to ΔVarmu and correction is performed by only a zero-phase-sequence voltage component. Thus, phase-to-phase voltages do not change and there is no influence on the grid side. In a case where the voltage command correction value ΔVarmu for U phase exceeds the maximum value ΔVzLIMH (ΔVarmu > ΔVzLIMH), ΔVz becomes equal to ΔVzLIMH, and thus correction cannot be performed by only a zero-phase-sequence voltage component. However, of the voltage command correction value ΔVarmu for U phase, a part corresponding to the maximum value ΔVzLIMH is corrected by a zero-phase-sequence voltage component, and therefore, change in phase-to-phase voltages can be minimized as compared to a case of not using zero-phase-sequence voltage (a case of not performing correction for V phase and W phase). In addition, since correction is performed by the voltage command correction value ΔVarmu only for U phase, voltage for circulation current control for U phase becomes equal between before and after correction, so that the influence on the circulation current control is small, thus contributing to balance of capacitor voltages. The same effects are provided also in a case where the voltage command correction value ΔVarmu for U phase is smaller than the minimum value ΔVzLIML (ΔVarmu < ΔVzLIML) or a correction target arm is included in another phase.

In the voltage command value correction unit 1240, U phase has been described as an example, but also for the other phases, a corrected positive arm output voltage command value and a corrected negative arm output voltage command value can be outputted in the same manner.

In the command generation unit 24 in FIG. 9, the corrected arm output voltage command values Varmpu*, Varmnu*, Varmpv*, Varmnv*, Varmpw*, Varmnw* for the respective phases outputted from the voltage command value correction unit 1240 are inputted to the normalization unit 246. In the same manner as described in embodiment 1, the normalization unit 246 normalizes the corrected output voltage command values for the respective arms outputted from the voltage command value correction unit 1240, on the basis of the capacitor voltage total values in the respective arms, and outputs the modulation commands kref for the respective arms.

As described above, according to embodiment 2, the same effects as in embodiment 1 are provided. Further, in a case where circulation current control is performed for all of the plurality of leg circuits, the voltage command correction value ΔVarm corresponding to overmodulation is corrected by zero-phase-sequence voltage, i.e., correction zero-phase-sequence voltage for correcting zero-phase-sequence voltage. Thus, an influence on the AC side can be suppressed.

In addition, correction zero-phase-sequence voltage to be used for correction is limited by tolerances between: all the arm output voltage command values; and upper and lower thresholds. Thus, the influence on the arms where overmodulation has not occurred can also be suppressed.

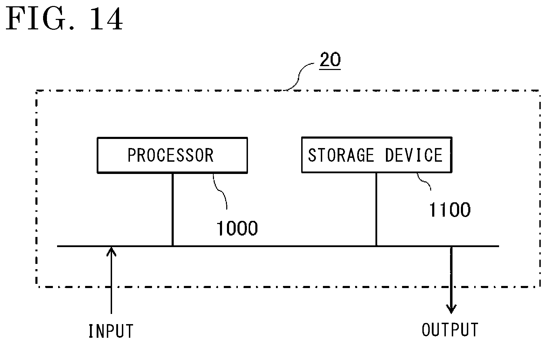

FIG. 14 shows an example of a hardware configuration of the control device 20 in the above embodiments 1 and 2. As shown in FIG. 14, the control device 20 includes a processor 1000 and a storage device 1100 as a processing circuit, for example.

The processor 1000 may be formed by a central processing unit (CPU), an application specific integrated circuit (ASIC), an integrated circuit (IC), a field programmable gate array (FPGA), various logic circuits, various signal processing circuits, and the like. As the processor 1000, a plurality of processors of the same kind or different kinds may be provided and execute each processing in a shared manner. The storage device 1100 is formed by a random access memory (RAM) configured to allow data to be read and written from the processor 1000, a read only memory (ROM) configured to allow data to be read from the processor 1000, and the like. The processor 1000 executes a program inputted from the storage device 1100 such as ROM.

In a case where the gate signal generation unit 26 shown in FIG. 4 is not provided in the control device 20 but is included in the converter cell 111, the hardware configuration as shown in FIG. 13 may be adopted.

### <Other embodiments>

(1) In FIG. 2A to FIG. 2C, as an example of the switching elements composing the converter cell 111, a case where the semiconductor switching elements 111U, 111L are insulated gate bipolar transistors (IGBT) to which diodes are connected in antiparallel has been shown. However, metal oxide semiconductor field effect transistors (MOSFET) may be used.
(2) The semiconductor switching elements are not limited to those formed by a Si (silicon) semiconductor, but may be formed by a wide bandgap semiconductor such as silicon carbide (SiC) or gallium nitride (GaN). The wide bandgap semiconductor has characteristics such as being capable of higher-speed switching, being capable of high-temperature operation, and having a high dielectric breakdown electric field intensity, and therefore is preferably applied to an MMC.

Although the disclosure is described above in terms of various exemplary embodiments and implementations, it should be understood that the various features, aspects, and functionality described in one or more of the individual embodiments are not limited in their applicability to the particular embodiment with which they are described, but instead can be applied, alone or in various combinations to one or more of the embodiments of the disclosure.

It is therefore understood that numerous modifications which have not been exemplified can be devised without departing from the scope of the present disclosure. For example, at least one of the constituent components may be modified, added, or eliminated. At least one of the constituent components mentioned in at least one of the preferred embodiments may be selected and combined with the constituent components mentioned in another preferred embodiment.

### DESCRIPTION OF THE REFERENCE CHARACTERS

1 power conversion device
2 AC power supply
3 transformer
4u, 4v, 4w connection point
6P positive DC terminal
6N negative DC terminal
10 power converter
100u, 100v, 100w leg circuit
100, 100P, 100N, 100uP, 100uN, 100vP, 100vN, 100wP, 100wN arm
111 converter cell
111U, 111L, 111U1, 111L1, 111U2, 111L2 semiconductor switching element
111C DC capacitor
111S voltage sensor
111a, 111b input/output terminal
112uP, 112uN, 112vP, 112vN, 112wP, 112wN reactor
20 control device
21 DC control unit
22 AC current control unit
23 circulation current control unit
24 command generation unit
25 arm capacitor voltage average value calculation unit
26 gate signal generation unit
240, 240U, 240V, 240W, 1240 voltage command value correction unit
241, 241U, 1241, 1241U, 1241V, 1241W correction voltage calculation unit
242, 242U filter
1243u, 1244u, 1245u, 1248u, 1249u adder
1246u filter
1247u multiplier
244 arm output voltage command value generation unit
246 normalization unit
1242 correction zero-phase-sequence voltage calculation unit
2411p, 2413p, 2415p, 2416p, 2417, 2411n, 2413n, 2415n, 2416n adder
2412p, 2414p, 2412n, 2414n filter
2418 multiplier
2421, 2422, 2424, 2425 filter
2423 limiter
2426 inversion circuit
1000 processor
1100 storage device
Idc DC current
Vdc DC voltage
Iac AC current
Icc circulation current
Vcap capacitor voltage
Vc in-arm capacitor voltage total value
Vcarm in-arm capacitor voltage average value
Varm arm output voltage command value
kref modulation command for arm
G gate signal

## Claims

1. A power conversion device comprising:
a power converter which performs power conversion between multiphase AC and DC and in which a plurality of leg circuits each having a positive arm and a negative arm connected in series are connected in parallel and connection points between the positive arms and the negative arms of the plurality of leg circuits are connected to AC lines for respective phases; and
a control device which controls the power converter, wherein
the positive arms and the negative arms each include one or a plurality of converter cells connected in series, the one or each converter cell having a series unit in which a plurality of semiconductor switching elements are connected in series and a DC capacitor connected in parallel to the series unit,
the control device includes an arm output voltage command value generation unit which generates arm output voltage command values which are command values for voltages to be outputted by a plurality of the arms,
circulation current control is performed for each of the leg circuits,
when a total value of voltages of all the DC capacitors included in at least one of the leg circuits is equal to or greater than a predetermined first threshold, a voltage command correction value for correcting the arm output voltage command values is generated to perform correction so that, if the arm output voltage command value for one of the positive arm and the negative arm in the leg circuit is greater than a predetermined upper threshold, the arm output voltage command value becomes equal to or smaller than the upper threshold, and if the arm output voltage command value is smaller than a predetermined lower threshold, the arm output voltage command value becomes equal to or greater than the lower threshold, and
the arm output voltage command value for another arm of the leg circuit for which circulation current control is being performed is corrected on the basis of the voltage command correction value.

2. The power conversion device according to claim 1, wherein
the first threshold is equal to or greater than 1/2 of voltage between DC terminals of the power converter.

3. The power conversion device according to claim 1 or 2, wherein
for each of the plurality of arms, the upper threshold is a voltage total value of the DC capacitors in the arm and the lower threshold is 0 V.

4. The power conversion device according to any one of claims 1 to 3, wherein
the control device performs control so that, in the leg circuit in which the total value of the voltages of all the DC capacitors is equal to or greater than the predetermined first threshold, a sum of total values of capacitor voltages in the positive arm and the negative arm becomes equal between before and after correction is performed on the basis of the voltage command correction value.

5. The power conversion device according to any one of claims 1 to 4, wherein
in all of the plurality of leg circuits, when the total value of the voltages of all the DC capacitors included in each of the leg circuits is equal to or greater than the predetermined first threshold, the voltage command correction value is corrected using correction zero-phase-sequence voltage for correcting zero-phase-sequence voltage.

6. The power conversion device according to claim 5, wherein
the correction zero-phase-sequence voltage is limited by tolerances between: all the arm output voltage command values; and the upper threshold and the lower threshold.
